# EUROPEAN PATENT APPLICATION

(11) **EP 3 421 529 A1**
(43) Date of publication of application: **02.01.2019**
(21) Application number: 17178663.5
(22) Date of filing: 29.06.2017
(51) Int. Cl.: C08K 5/13, F16L 9/12

(54) **POLYOLEFIN ARTICLES WITH IMPROVED RESISTANCE AGAINST CHLORINE DIOXIDE**

(71) Applicant: Songwon Industrial Co., Ltd., Ulsan 680-090 (KR)
(72) Inventor: Keck, Klaus, B-4031 Angleur (BE); Schmutz, Thomas, CH-4052 Basel (CH); Kim, Sua, 44766 Ulsan (KR)
(74) Representative: Michalski Hüttermann & Partner Patentanwälte mbB

(57) **Abstract**

The invention relates to a polyolefin composition comprising two phenolic stabilizers, one of them being unsubstituted in one ortho position to the hydroxyl group of the phenol, the other being bisubstituted. Such a polyolefin composition has been found to be very resistant against Chlorine Dioxide.

## Description

The present invention relates to a polyolefin composition containing stabilizers and articles made using such polyolefin compositions, such as pipes, packaging articles, films and inliners or the like.

Polyolefins and articles made thereof have only a very limited resistance against the reaction with oxygen and hence in itself are not suitable for semi-durable and durable applications. Hence these articles in itself have only a suitable lifetime (or service life) of several weeks or several months. Within this time frame in general mechanical, optical and organoleptic properties deteriorate to a degree that the article is no longer suitable for its purpose. In order to extend the lifetime, thermal stabilizers (also referred to as antioxidants) need to be added. E.g. in the case of pipes, the required service life is several decades.

Especially for pipes Chlorine Dioxide (ClO₂) is used for sterilization due to its high effectiveness in eliminating pathogenic microorganisms such as fungi, bacteria and viruses and also in preventing the formation of biofilm.

However, ClO₂, especially or in part due to is radical nature, is known to be usually more aggressive towards stabilizers present in the polyolefin than chlorine itself or other disinfectants. Therefore, it is a constant purpose to provide polyolefin acticles that show improved resistance against Chlorine Dioxide.

It is therefore an object to provide polymer compositions which show sufficient stability, especially towards ClO₂.

This object is solved by a polymer composition according to Claim 1 of the present invention. Accordingly, a polyolefin composition is provided, comprising a polyolefin and a first stabilizer comprising a phenol moiety which is alkyl substituted in ortho position to the hydroxy group of the phenol moiety but unsubstituted in the other ortho position; and a second stabilizer comprising a phenol moiety which is alkyl substituted in both ortho positions to the hydroxy group of the phenol moiety.

Surprisingly it has been found that by using such a polyolefin composition shows a much higher resistance towards Chlorine Dioxide.

The present invention furthermore relates to a use of a stabilizer composition, comprising a first stabilizer comprising a phenol moiety which is alkyl substituted in ortho position to the hydroxy group of the phenol moiety but unsubstituted in the other ortho position; and a second stabilizer comprising a phenol moiety which is alkyl substituted in both ortho positions to the hydroxy group of the phenol moiety for stabilizing polyolefins against ClO₂

The term "polyolefine" according to the present invention especially means and/or includes all substrates as defined in US 2015/0090671 A1, US 2014/0296398 A1, WO 2006/119935 A1 and/or US 2005/0148700 A1.

The individual stabilizers and components for these stabilizers will be discussed in more detail, whereby any features can be combined ad libitum:

### First stabilizer:

According to the invention, the first stabilizer comprises a phenol moiety which is alkyl substituted in ortho position to the hydroxy group of the phenol moiety but unsubstituted in the other ortho position, i.e. a structure which comprises the following moiety: 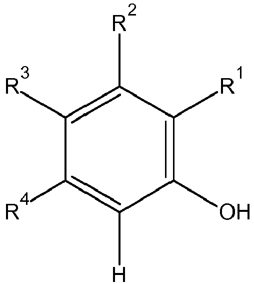 with R¹ being alkyl, preferably methyl, ethyl, propyl, n-butyl, isobutyl and t-butyl, R² to R⁴ independently are hydrogen. or any organic moiety under the proviso that not all R² to R⁴ are hydrogen.

According to a preferred embodiment of the present invention, the phenol moiety is substituted in p-position to the hydroxyl group, i.e. R³ is not hydrogen. More preferred R² and R⁴ are hydrogen, so that only R³ is substituted out of R² to R⁴.

According to a preferred embodiment of the present invention, the first stabilizer comprises two phenol moieties which are linked to each other via a C₁-bridge at R³ (which of course may be otherwise substituted, too). This motive may - of course - be present in the stabilizer more than once, i.e. according to a preferred embodiment of the present invention, the first stabilizer comprises one or more pair of phenol moieties, which are linked to each other via a C₁-bridge.

According to a preferred embodiment of the present invention the first stabilizer comprises the following molecule:

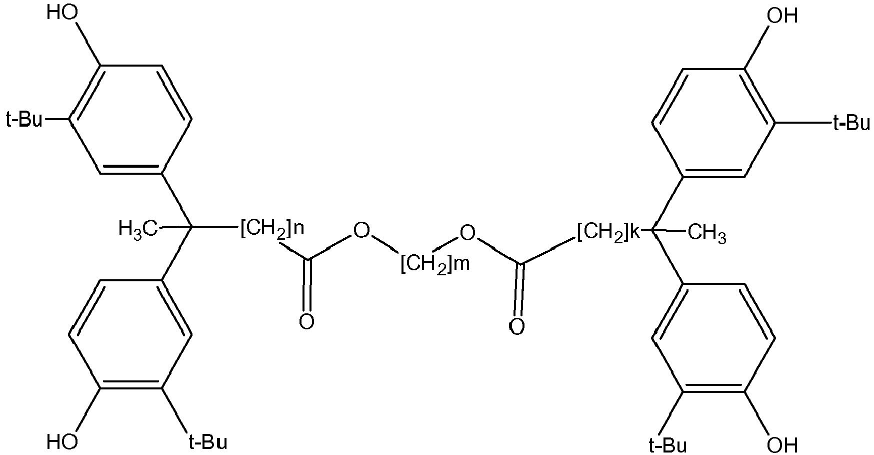

With n,m, k being independent from each other integers from 1 to 4. Preferably n=k=1 and m=2, so that the first stabilizer comprises the following structure:

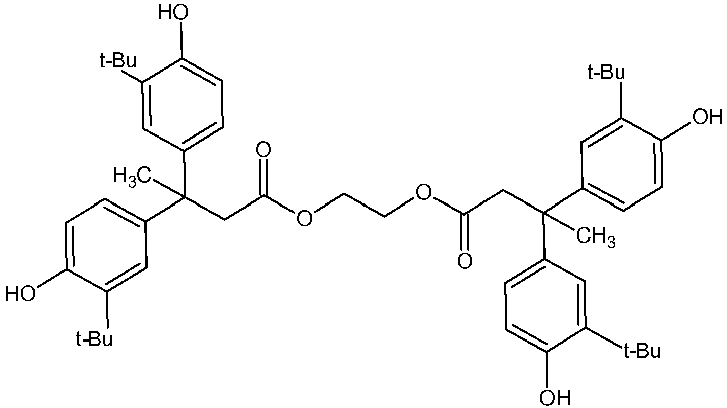

### Second stabilizer:

According to the invention, the second stabilizer comprises a phenol moiety which is alkyl substituted in both ortho positions to the hydroxy group of the phenol moiety, i.e. a structure which comprises the following moiety:

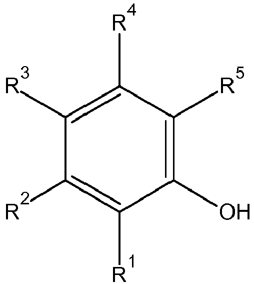

With R¹ and R⁵ being (independent from each other) alkyl, preferably methyl, ethyl, propyl, n-butyl, isobutyl and t-butyl and R² to R⁴ independently either being hydrogen or any organic moiety under the proviso that not all R² to R⁴ are hydrogen.

According to a preferred embodiment one of R¹ and R⁵ is t-butyl, according to another preferred embodiment both are t-butyl.

According to a preferred embodiment of the present invention, the phenol moiety is substituted in p-position to the hydroxy group, i.e. R³ is not hydrogen. More preferred R² and R⁴ are hydrogen, so that only R³ is substituted out of R² to R⁴.

According to a preferred embodiment of the present invention, R³ = -COOR⁶ with R⁶ being a linear alkyl with 10 to 25 carbon atoms, preferably 14 to 18 carbon atoms, most preferred 16 carbon atoms.

According to a preferred embodiment of the present invention, the second stabilizer comprises two phenol moieties which are linked to each other via a carbon at R³ (which of course may be otherwise substituted, too). This motive may - of course - be present in the stabilizer more than once, i.e. according to a preferred embodiment of the present invention, the first stabilizer comprises one or more pair of phenol moieties, which are linked to each other via a C₁-bridge.

According to a preferred embodiment of the present invention the second stabilizer comprises three phenol moieties which are linked to a central ring via a C₁-bridge at R³.

According to a preferred embodiment of the present invention, the second stabilizer comprises one or more of the following structures:

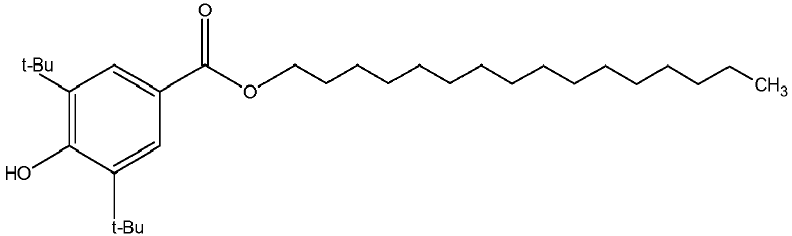

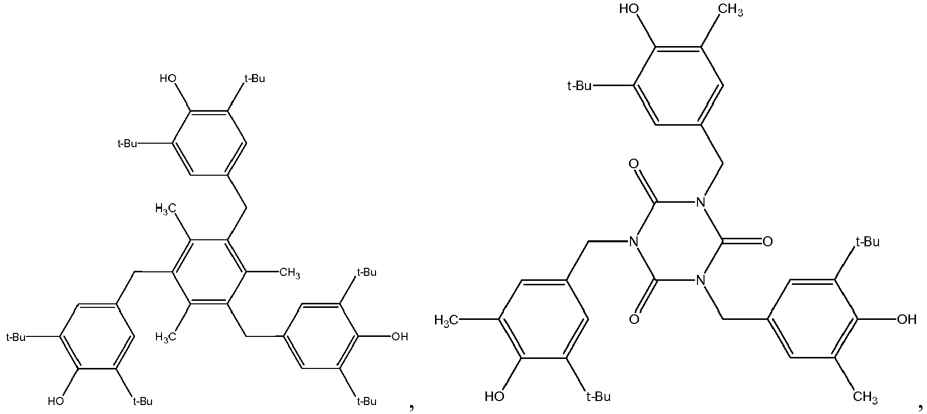

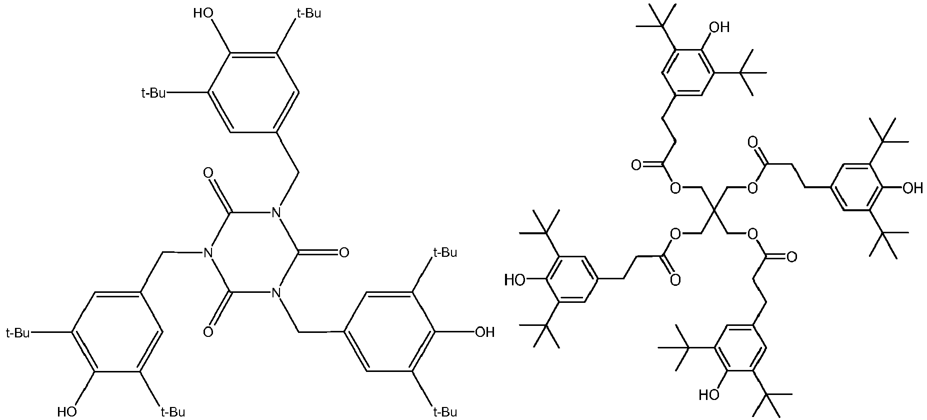

According to a preferred embodiment the polyolefin composition comprises more than one second stabilizer. Surprisingly this has been shown to have great stabilizing effects for many applications within the present invention.

According to a preferred embodiment, the polyolefin composition further comprises an acid scavenger. Consequently, the present invention also relates to the use of a stabilizer composition as described above together with an acid scavenger.

The term "acid scavenger" according to the present invention especially means and/or includes a compound which neutralizes acidity which may originate from the polymerization catalyst of the polyolefin synthesis; usually this will be mainly Ziegler/Natta catalysts. It is understood, that not every catalyst used for polyolefin synthesis requires an acid scavenger.

According to a preferred embodiment of the present invention, the acid scavenger comprises, preferably consists essentially of a metal oxide, metal hydroxide, metal organic salt and/or metal carbonate. Especially preferred are hydrotalcite, hydrocalumite, metal fatty acids, zinc oxide and calcium carbonate.

The term "consisting essentially of" in the sense of the present invention especially means and/or includes (in wt/wt) ≥ 95%, more preferred ≥ 98% and most preferred ≥ 99%.

According to a preferred embodiment of the present invention the polyolefin composition further comprises an aminic antioxidant.

Preferably the aminic antioxidant is an aromatic compound, with the amine bound to an aromatic core.

Especially preferred are aminic antioxidants selected out of the group comprising phenylenediamines, diphenylamines, quinolines, naphtylamines and mixtures thereof.

More preferred the aminic antioxidant is selected out of the group comprising N,N'-Bis(1,4-dimethylpentyl)-p-phenylenediamine, N-(1,3-Dimethylbutyl)-N'-phenyl-p-phenylenediamine, N-(Methylethyl), N'-Phenyl-1,4-benzoldiamien, N,N'-Diphenyl-1,4-phenylenediamine, styrenated diphenylamines, 4,4, bis (α,α-domethylbenzyl) diphenylamine, Polymerized 1,2-dihydro-2,2,4-trimethylquinoline, 6-Ethoxy-2,2,4-trimethyl-1,2-dihydroquinoline, N-phenylnaphthalen-1-amine, N-phenyl-2-naphthylamine or mixtures thereof.

The present invention furthermore relates to a product comprising an inventive polyolefin and/or a product making use of the inventive use.

According to a preferred embodiment, the product comprises a product selected from the group comprising
- Pipes
- Rigid packaging
- Flexible packaging
- Protective liners, seals and gaskets

The aforementioned components, as well as the claimed components and the components to be used in accordance with the invention in the described embodiments, are not subject to any special exceptions with respect to their size, shape, material selection and technical concept such that the selection criteria known in the pertinent field can be applied without limitations.

Additional details, characteristics and advantages of the object of the invention are disclosed in the sub-claims and the following description of the respective figures --which in an exemplary fashion--show one preferred embodiment according to the invention. Such embodiment does not necessarily represent the full scope of the invention, however, and reference is made therefore to the claims and herein for interpreting the scope of the invention. It is to be understood that both the foregoing general description and the following detailed description are exemplary and explanatory only and are intended to provide further explanation of the present invention as claimed.

### Description of the experimental data:

### Polyolefin:

The experimental tests which are described further on were conducted with a commercial HDPE grade polyolefin. It is a Ziegler/Natta catalyzed polyethylene manufactured with a melt flow index MFI_{2.16/190} of 4.0 [g/10 min] and a density of 0.953 [g/cm³].

### Sample preparation:

The compounding of the HDPE took place using a Toshiba TEM 37BS twin screw extruder with a temperature profile from 190°C to 215°C under nitrogen. Injection molding of plaques of 1.6 mm thickness was carried out on a Dongshin D-150 injector at a temperature profile of 220 to 245 C. Later-on the samples were manually cut to fit into the water storage device.

### Water storage test:

Samples were exposed to water at 70°C which contained 3 ppm chlorine dioxides. The chlorine dioxide level was generated as follows:3.75g of 8% commercial chlorine dioxide solution was added into a 1000 ml beaker. 996.25g of distilled water was added into the beaker. The solution was mixed and subsequently poured into the water bath used for the storage test. The above procedure was repeated and then the water storage device was closed. Chlorine dioxide levels were measured twice a week and corrected in case needed.

### Criterion:

OIT (Oxygen Induction Time) was used at a temperature of 200°C and an oxygen flow of 50 ml/min. OIT was carried out on a punched-out sample of 5-8 mg. The OIT test is used as a test to attempt to predict the lifetime of (very) durable plastic articles.

### Formulations:

All formulations contained 1200 ppm calcium stearate as antacid and 2000 ppm SONGNOX® PQ as processing stabilizer. For experiment 1, the following formulations were examined

| **Sample** | **First Stabilizer** | | **Second Stabilizer** | |
|---|---|---|---|---|
| | Type | Concentration [ppm] | Type | Concentration [ppm] |
| C.1 | | | - | - |
| C.2 | - | - | 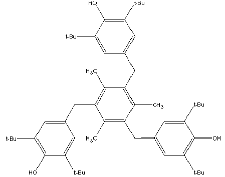 | 3000 |
| C.3 | - | - | 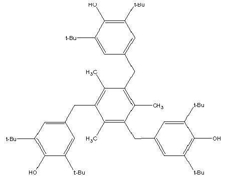 | 6000 |
| 1.1 | 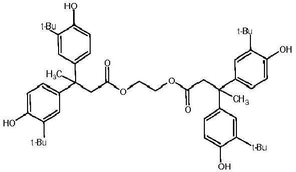 | 3000 | 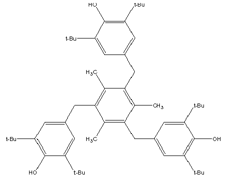 | 3000 |

Experiment 1 yields the following results:

| **Formulation** | **Exposure time [days] until a remaining OIT value of 30 min** |
|---|---|
| C.1 | Initial OIT already < 10 |
| C.2 | 81 |
| C.3 | Only marginal improvement over C.2 |
| I.1 | 282 |

As can be seen from comparative example C.1, omitting the addition of a thermal stabilizer, does not yield a polyolefin that is suitable for durable applications (e.g. pipe) as the initial OIT is already very low, which is an indication of a very short lifetime of the plastic article (even before exposure to chlorine dioxide). Addition of a thermal stabilizer which comprises a phenol moiety which is alkyl substituted in both ortho positions to the hydroxy group of the phenol moiety yields a certain level of OIT; however, the OIT level achieved in comparative example C.2 is still considered as insufficient. Comparative example C.3 teaches that the OIT can only be marginally increased by significantly increasing the concentration of the above described thermal stabilizer. Still, the now achieved OIT level is considered insufficient.

Inventive example I.1 teaches surprisingly that the combination of the above mentioned thermal stabilizer which comprises a phenol moiety which is alkyl substituted in both ortho positions to the hydroxy group of the phenol moiety with another stabilizer comprising a phenol moiety which is alkyl-substituted in ortho position to the hydroxy group of the phenol moiety but unsubstituted in the other ortho position, yields a significantly improved OIT (which is considered suitable for durable applications of the plastic article)

In a second set of experiments, the following 3 formulations were evaluated for the absolute OIT value after 8 months of exposure at 70°C to water containing 3 ppm chlorine dioxides.

| **Sample** | **First Stabilizer** | | **Second Stabilizer** | |
|---|---|---|---|---|
| | Type | ppm | Type | ppm |
| C.2 | - | - | 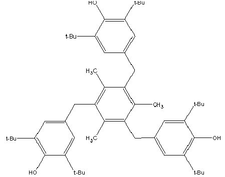 | 3000 |
| I.1 | 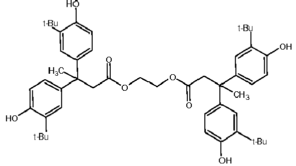 | 3000 | 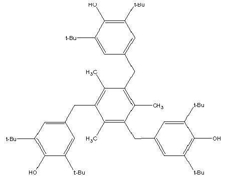 | 3000 |
| I.2 | - | - | 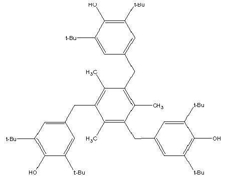 | 3000 |
| | | | 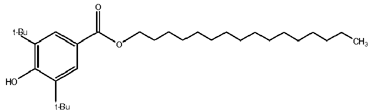 | 3000 |
| I.3 | 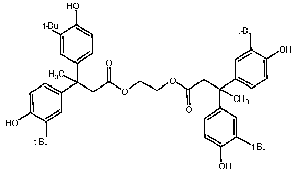 | 1000 | 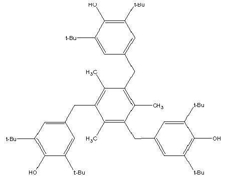 | 3000 |
| | | | 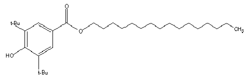 | 1000 |

The following results were obtained.

| **Formulation** | **Absolute OIT [Minutes] after 8 months of exposure** |
|---|---|
| C.2 | 0 |
| I.1 | 36.8 |
| 1.2 | 30.7 |
| 1.3 | 45.3 |

As can be seen from comparative example C.2, the addition of a thermal stabilizer which comprises a phenol moiety which is alkyl substituted in both ortho positions to the hydroxy group of the phenol moiety yields an OIT value of 0 [min], thus indicating an entire depletion of the thermal stabilizer after 8 months. Inventive example I.3 yields surprisingly by far the highest OIT value, although used at a 33% lower concentrations than examples I.1 and I.2.

The particular combinations of elements and features in the above detailed embodiments are exemplary only; the interchanging and substitution of these teachings with other teachings in this and the patents/applications incorporated by reference are also expressly contemplated. As those skilled in the art will recognize, variations, modifications, and other implementations of what is described herein can occur to those of ordinary skill in the art without departing from the spirit and the scope of the invention as claimed. Accordingly, the foregoing description is by way of example only and is not intended as limiting. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage. The invention's scope is defined in the following claims and the equivalents thereto. Furthermore, reference signs used in the description and claims do not limit the scope of the invention as claimed.

## Claims

1. A polyolefin composition, comprising a polyolefin and a first stabilizer comprising a phenol moiety which is alkyl substituted in ortho position to the hydroxy group of the phenol moiety but unsubstituted in the other ortho position; and a second stabilizer comprising a phenol moiety which is alkyl substituted in both ortho positions to the hydroxy group of the phenol moiety.

2. The polyolefin composition according to Claim 1, whereby the first stabilizer comprises the following moiety 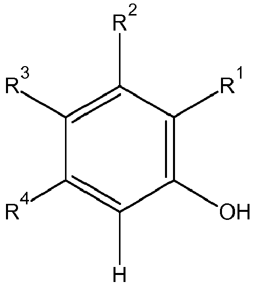 with R¹ being alkyl, preferably methyl, ethyl, propyl, n-butyl, isobutyl and t-butyl, R² to R⁴ independently are hydrogen. or any organic moiety under the proviso that not all R² to R⁴ are hydrogen.

3. The polyolefin composition according to Claim 1 or 2, whereby in the first stabilizer R³ is not hydrogen and R² and R⁴ are hydrogen

4. The polyolefin composition according to any of the claims 1 to 3, whereby the first stabilizer comprises the following molecule: 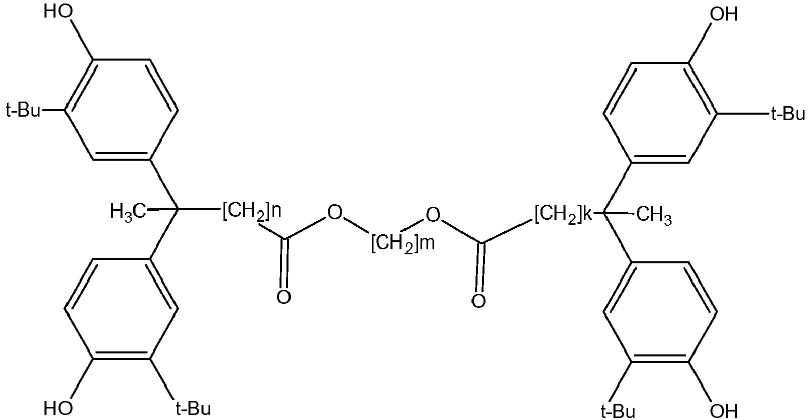 With n,m, k being independent from each other integers from 1 to 4.

5. The polyolefin composition according to any of the claims 1 to 4, whereby the second stabilizer comprises the following moiety: 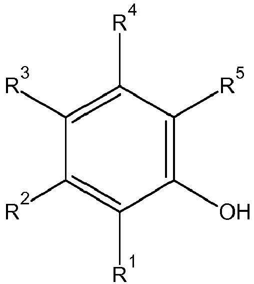 with R¹ and R⁵ being (independent from each other) alkyl, preferably methyl, ethyl, propyl, n-butyl, isobutyl and t-butyl and R² to R⁴ independently either being hydrogen or any organic moiety under the proviso that not all R² to R⁴ are hydrogen.

6. The polyolefin composition according to any of the claims 1 to 5, whereby in the second stabilizer one of R¹ and R⁵ is t-butyl

7. The polyolefin composition according to any of the claims 1 to 6, whereby in the second stabilizer R³ is not hydrogen and R² and R⁴ are hydrogen.

8. The polyolefin composition according to any of the claims 1 to 7, whereby the second stabilizer comprises one or more of the following structures:

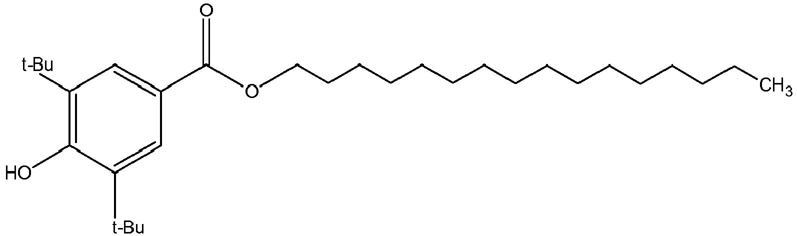

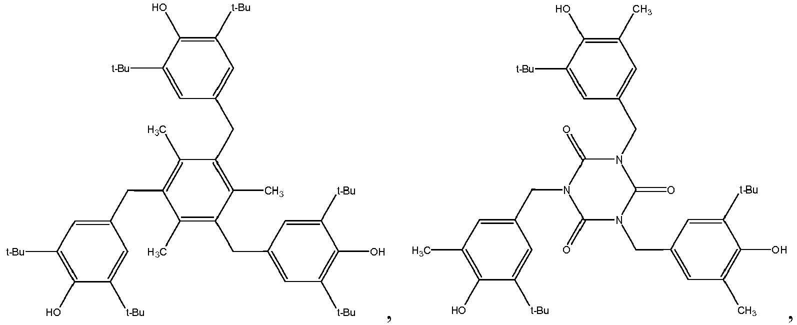

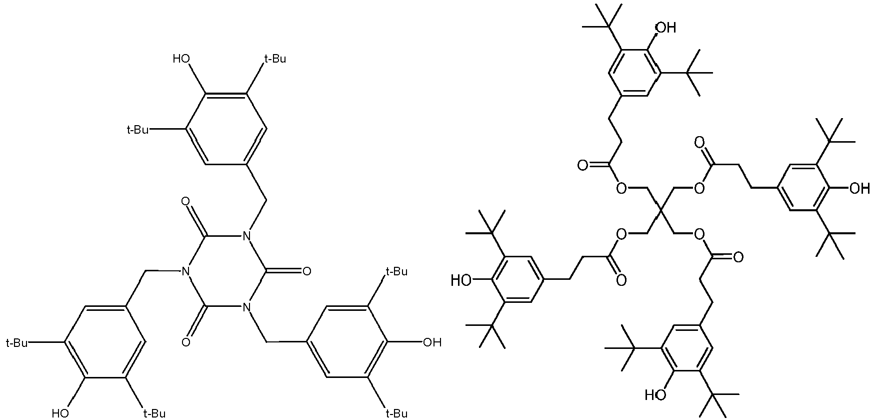

9. The polyolefin composition according to any of the claims 1 to 8, whereby the polyolefin composition comprises more than one second stabilizer.

10. The polyolefin composition according to any of the claims 1 to 9, whereby the polyolefin composition further comprises an acid scavenger

11. The polyolefin composition according to any of the claims 1 to 10, whereby the acid scavenger comprises, preferably consists essentially of a metal oxide, metal hydroxide, metal organic salt and/or metal carbonate.

12. The polyolefin composition according to any of the claims 1 to 11, whereby the polymeric composition furthermore comprises an aminic antioxidant

13. The polyolefin composition according to any of the claims 1 to 12, whereby the polymeric composition furthermore comprises an aminic antioxidant selected out of the group comprising phenylenediamines, diphenylamines, quinolines, naphtylamines and mixtures thereof.

14. Use of a stabilizer composition, comprising a first stabilizer comprising a phenol moiety which is alkyl substituted in ortho position to the hydroxy group of the phenol moiety but unsubstituted in the other ortho position; and a second stabilizer comprising a phenol moiety which is alkyl substituted in both ortho positions to the hydroxy group of the phenol moiety for stabilizing polyolefins against ClO₂.

15. A Product comprising a polyolefin according to any of the claims 1 to 13 or making use of claim 14, the product being selected out of:
- Pipes
- Rigid packaging
- Flexible packaging
- Protective liners, seals and gaskets
